# EUROPEAN PATENT SPECIFICATION

(11) **EP 4 381 812 B1**
(45) Date of publication and mention of the grant of the patent: **03.09.2025**
(21) Application number: 22743611.0
(22) Date of filing: 06.07.2022
(51) Int. Cl.: H04W 48/16, H04W 4/90, H04W 48/12, H04W 48/18, H04W 24/04

(54) **SIGNALLING APPROACHES FOR DISASTER PLMNS**
SIGNALISIERUNGSANSÄTZE FÜR KATASTROPHEN-PLMNS
APPROCHES DE SIGNALISATION POUR PLMN DE CATASTROPHE

(30) Priority: 02.08.2021 US 202163228361 P
(43) Date of publication of application: 12.06.2024
(73) Proprietor: Telefonaktiebolaget LM Ericsson (publ), 164 83 Stockholm (SE)
(72) Inventor: BERGSTRÖM, Mattias, 192 70 Sollentuna (SE)
(74) Representative: Ericsson
(86) International application number: PCT/SE2022/050691
(87) International publication number: WO 2023/014260

(56) References cited:
- WO-A1-2021/007447
- "3rd Generation Partnership Project; Technical Specification Group Core Network and Terminals; Study on the support for minimization of service interruption; (Release 17)", 4 June 2021 (2021-06-04), XP052021231, Retrieved from the Internet <URL:https://ftp.3gpp.org/tsg_ct/TSG_CT/TSGC_92e/Docs/CP-211122.zip 24811-200.docx> [retrieved on 20210604]
- ERICSSON: "Remaining issues for MINT", vol. RAN WG2, no. Electronic meeting; 20220117, 11 January 2022 (2022-01-11), XP052094649, Retrieved from the Internet <URL:https://ftp.3gpp.org/tsg_ran/WG2_RL2/TSGR2_116bis-e/Docs/R2-2201552.zip R2-2201552 - Remaining issues for MINT.docx> [retrieved on 20220111]

## Description

### TECHNICAL FIELD

The present application relates to wireless communication networks. In particular, some embodiments described herein relate to operation of wireless communication networks and wireless communication devices during disasters.

### BACKGROUND

According to the 3GPP Minimization of Interruption (MINT) feature, a mobile network, such as a public land mobile network (PLMN) can host user equipment (UEs) of another network in case of a disaster situation. For example, if a first network becomes inoperative, the users of that network may be allowed to use another network in the event of a disaster. Two types of PLMNs are discussed herein: a serving PLMN and a disaster PLMN. A serving PLMN is a PLMN which is associated with a given cell under normal (non-disaster) situations. These may be the PLMN(s) of the operator(s) which owns the cell, and potentially other PLMNs whose UEs also are allowed to use the cell. A Disaster PLMN is a PLMN whose UEs are welcome to use the cell in disaster situations. These users may normally (in non-disaster situations) not be allowed to use the cell, but are only allowed to do so when there is a disaster so their normal PLMN is not operating normally.

The serving PLMNs of a cell are indicated in the CellAccessRelatedInfo field in the SIB1 message broadcast in the cell as part of the system information associated with the cell. There can be up to 12 Serving PLMNs in a normal New Radio (NR) cell.

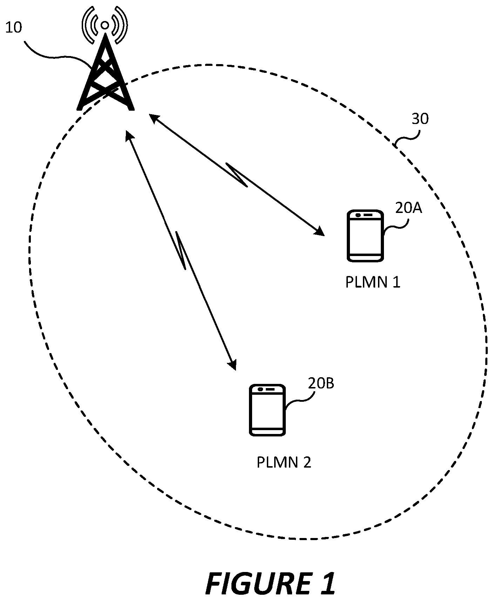

One cell in a 3GPP system can be shared among different operators. Normally, each operator has their own PLMN. If three operators (e.g., operator A, operator B and operator C) share a cell, the PLMNs of those three operators are all broadcast by the cell as part of its system information. For example, referring to **Figure 1****,** a mobile network is illustrated including a base station 10 that serves a cell 30. The cell 30 is shared by two PLMNs, PLMN 1 and PLMN 2. A first UE 20A is authorized to use PLMN 1 in the cell 30, while a second UE 20B is authorized to use PLMN 2 in the cell 30.

In particular, the System Information Block 1 (SIB1) has a field named "cellAccessRelatedInfo". That field contains a list named PLMN-IdentityInfoList. Each entry in the PLMN-IdentityInfoList is a PLMN-IdentityInfo. Each PLMN-IdentityInfo has several fields such as a cell identity, tracking area code, etc., along with the plmn-IdentityList field. That field is yet another list. Each entry in that list is a PLMN identity.

The contents of a SIB1 message are shown in **Table** 1, below.

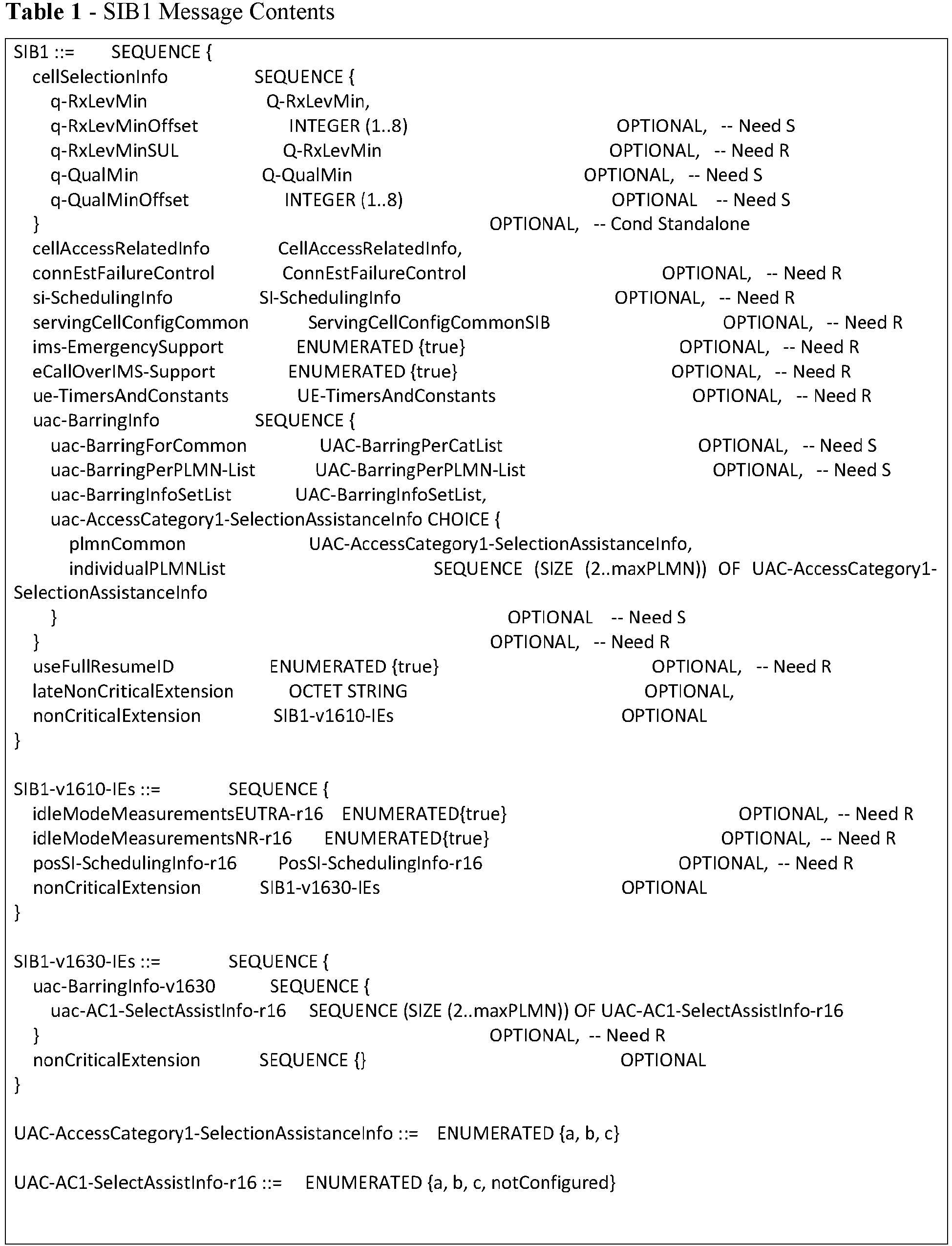

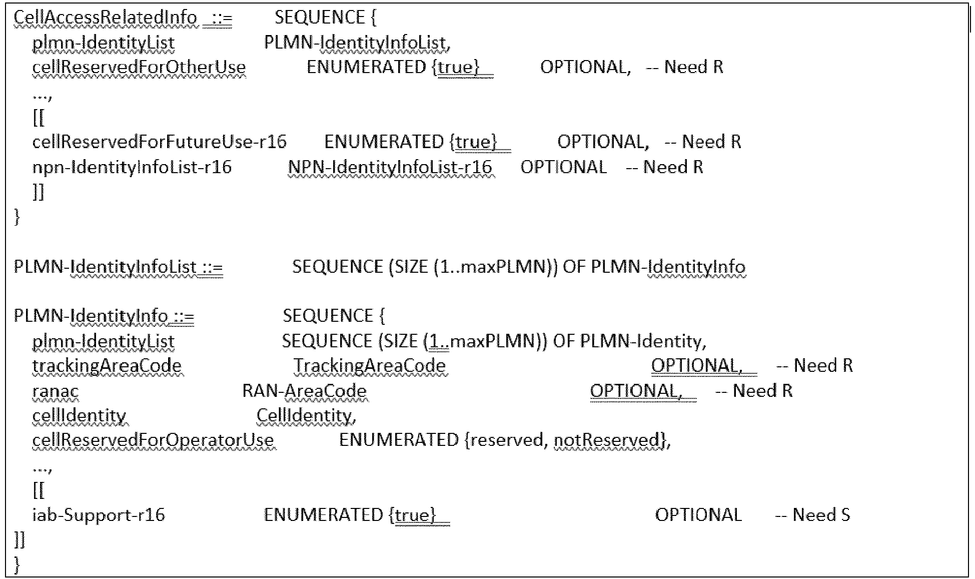

In situations where there are many PLMNs, to indicate disaster PLMNs for serving PLMNs would require a large amount of signalling. The signalling size of system information, and in particular SIB1 (since SIB1 is frequently repeated) should be kept low so as not to waste radio resources.

3GPP document CP-211122 suggests that if a PLMN D is subject to disaster and PLMN A is alive and not subject to disaster. PLMN A is informed of the disaster condition in PLMN D. Once the PLMN A is prepared to accept inbound roamers from PLMN D, PLMN A shall update its broadcast information (System Information) to include an indication of disaster roaming active condition. Broadcasting the disaster roaming active condition in SIB1 and not broadcasting in SIB X additional PLMN IDs for which disaster roaming is active indicates that disaster roaming is allowed for UEs from any PLMN. This is useful for the case where all PLMNs in the area, except PLMN A, are facing disaster condition. WO 2021/007447 A1 suggests an access and mobility management function (AMF) of a first public land mobile network (PLMN) receives status information from a first network function. The status information comprises a network disaster indication and an identifier of the second PLMN. The network disaster indication indicates a failure of a second PLMN in a coverage area. Based on the status information, the AMF determines at least one base station of the first PLMN. The AMF sends a configuration message to the at least one base station. The configuration message comprises the status information.

### SUMMARY

The invention defines a network node, a user equipment and the corresponding methods for signalling disaster PLMNs in a flexible manner so that signalling overhead is kept small.

According to one aspect, the above-mentioned object is achieved with a method according to claim 1 and a corresponding network node according to claim 3. According to another aspect, the above-mentioned object is achieved with a method according to claim 4 and a corresponding user equipment according to claim 6.

### BRIEF DESCRIPTION OF THE DRAWINGS

**Figure 1** illustrates a mobile network including a base station that serves a cell.
**Figure 2** illustrates a method of operating a network node in a radio access network according to some embodiments.
**Figure 3** illustrates a method of operating a UE in a radio access network.
**Figure 4** illustrates an example of a communication system in accordance with some embodiments.
**Figure 5** illustrates an example of a UE in accordance with some embodiments.
**Figure 6** illustrates an example of a network node in accordance with some embodiments.
**Figure 7** illustrates an example of a host.
**Figure 8** is a block diagram illustrating a virtualization environment in which functions may be virtualized.
**Figure 9** shows a communication diagram of a host communicating via a network node with a UE over a partially wireless connection.

### DETAILED DESCRIPTION

As described above, the SIB1 message includes lists of lists for PLMNs. As an example of this signalling, assume that the three operators (A, B and C) share a cell, where operator A and B use the same cell identities for the shared cell, while operator C uses its own cell identity. The list of lists approach allows this situation by signalling the following in SIB1: the cellAccessRelatedInfo field in the cell has two entries in the PLMN-IdentityInfoList. The first entry is the PLMN-IdentityInfo for operator A and operator B. That first entry of PLMN-IdentityInfo has two PLMNs listed in plmn-IdentityList, namely PLMN A and PLMN B. The PLMN-IdentityInfo also another entry, namely an entry for operator C. That entry has also a plmn-IdentityList, but with only one entry, namely PLMN C.

There currently exist certain challenge(s). For example, to indicate all associations of disaster PLMNs and serving PLMNs in SIB1 may require a significant amount of signalling overhead, since there may be many PLMNs. The signalling size of system information, and in particular SIB1 (since SIB1 is frequently repeated), should be kept low as to not waste radio resources.

Certain aspects of the disclosure and their embodiments may provide solutions to these or other challenges. In particular, some embodiments described herein provide methods for signalling the identity of disaster PLMNs that may use a cell and the association of disaster PLMNs with the serving PLMN(s) of the cell. In particular, some embodiments described herein provide signalling approaches for disaster PLMN provision. Embodiments described herein include sending a common list of disaster PLMNs that are applicable to sets of serving PLMNs of the cell, sending a common list of disaster PLMNs that are applicable to selected sets of serving PLMNs of the cell, sending a common list of disaster PLMNs and indicate which of those apply to which serving PLMNs, sending both a common list and a serving PLMN-specific list and the UE uses the union of them, and sending a common list and for each serving PLMN indicate to use the common list or use a serving PLMN-specific list of disaster PLMNs.

Certain embodiments may provide one or more of the following technical advantage(s). Some embodiments described herein may provide efficient signalling of disaster PLMNs and associations of disaster PLMNs with one or more serving PLMNs in the system information of a cell.

Some of the embodiments contemplated herein will now be described more fully with reference to the accompanying drawings. Embodiments are provided by way of example to convey the scope of the subject matter to those skilled in the art.

In the following description, when it is described that information is signaled for or applies to a serving PLMN, such information can be signaled for or apply to a set of serving PLMNs (i.e. one or more PLMNs), due to the list-of-list structure used to signal the identity of PLMNs in SIB1 messages, as described above. Moreover, the description herein of the use of SIB1 to signal the identities of disaster PLMNs is provided as a non-limiting example. It may be possible to signal the identities of disaster PLMNs in another portion of the system information, such as another SIB. Some embodiments are described herein in connection with NR technology. However, some embodiments may be applied to other radio access technologies, such as LTE, UMTS, etc.

Some embodiments signal the availability of disaster PLMNs by providing a common list of disaster PLMNs that are applicable to all serving PLMNs of the cell. That is, in some embodiments, the network indicates a list of disaster PLMNs which are common for all serving PLMNs. This can be implemented by a list of PLMNs which is placed in the CellAccessRelatedInfo IE of SIB 1 as shown, for example, in **Table 2** below.

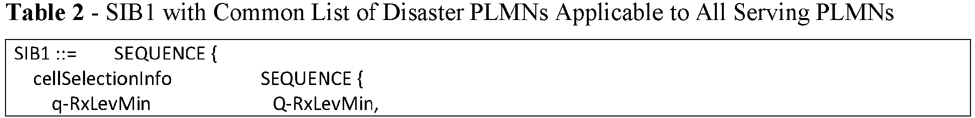

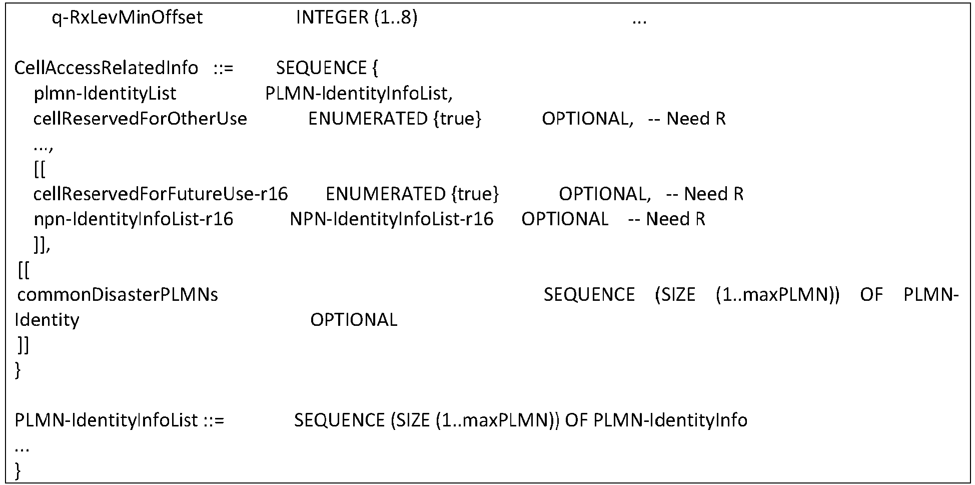

Another approach to implement this embodiment in the specification is that the list is placed on the top-level of SIB 1, as shown in **Table 3** below.

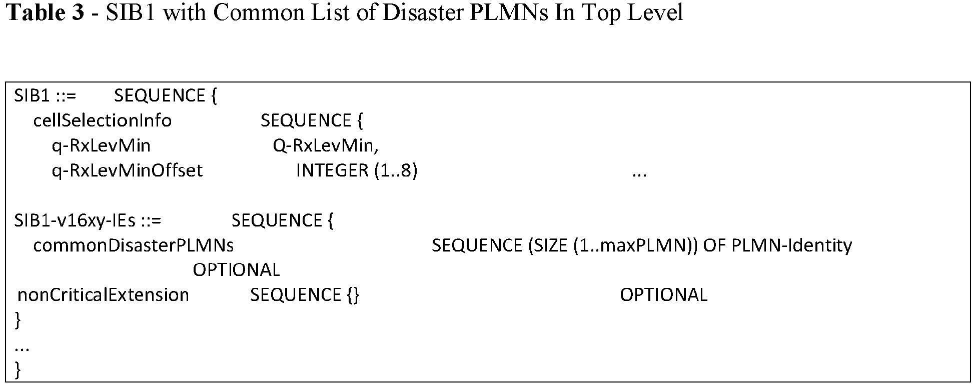

In yet further embodiments, the common list of Disaster PLMNs that are applicable to all serving PLMNs may be signalled in another SIB.

In further embodiments, the network indicates a list of disaster PLMNs which are common for a selected set of serving PLMNs. The network would indicate for a serving PLMN (or set of Serving PLMNs) whether the list of common disaster PLMNs applies to the serving PLMN or not. That can be implemented by a flag for a serving PLMN. An example implementation is shown in **Table 4** below in which the flag "commonDisasterPLMNsApplicable" indicates that the common disaster PLMNs (indicated in commonDisasterPLMN) are applicable to the PLMNs of that PLMN-IndentifyInfo entry.

With this approach, if the flag is not provided/indicated for a serving PLMN, no disaster PLMN are applicable to this serving PLMN. In the example of Table 4, the common disaster PLMNs are placed in CellAccessRelatedInfo but could be placed in another place as well, e.g. on the top-level in SIB 1 or in another SIB, etc.

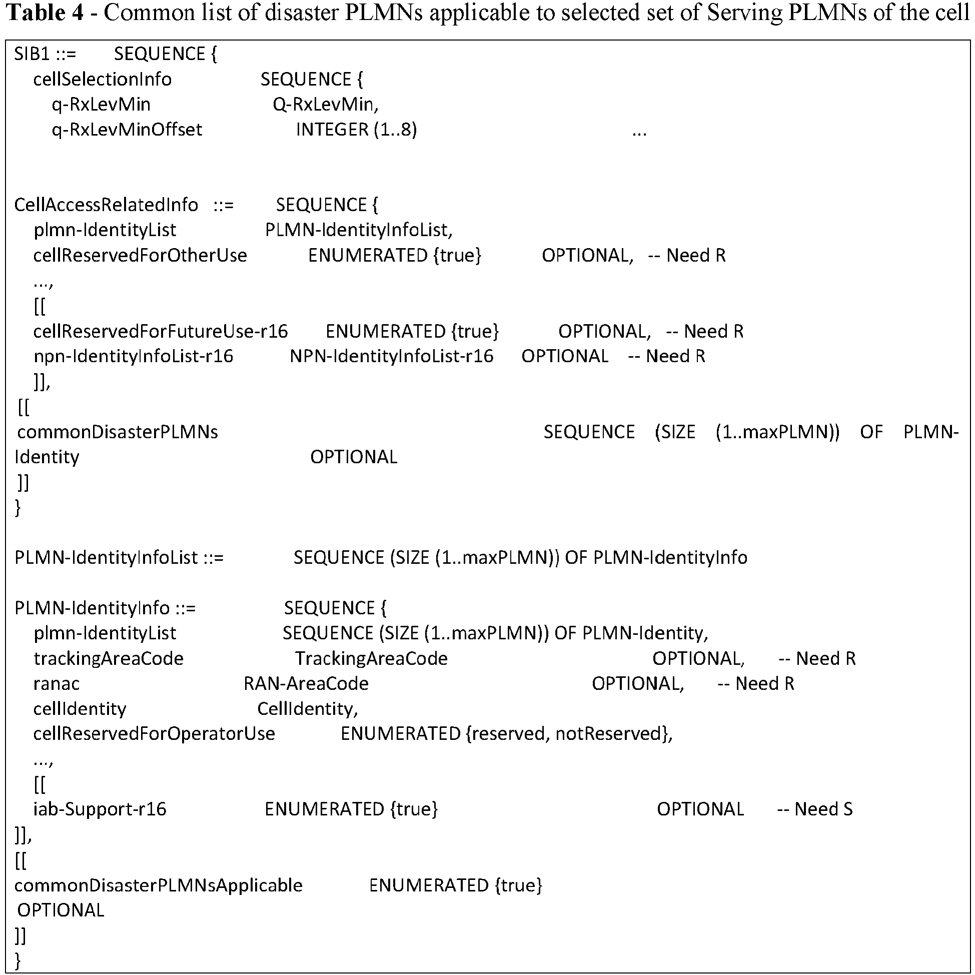

In further embodiments, the network may provide a set of disaster PLMNs which are common for a set of serving PLMNs. The network may further indicate, for a set of serving PLMNs, which of the common disaster PLMNs apply for the set of serving PLMNs.

For example, assume there are disaster PLMN X, Y and Z, and serving PLMN A and B. The network would indicate for PLMN A which of disaster PLMN X, Y and Z are applicable, and similarly, indicate for PLMN B which of disaster PLMN X, Y and Z are applicable. It would be possible to indicate that none of the common disaster PLMNs are applicable for a given serving PLMN.

This association of disaster PLMNs and serving PLMNs can be implemented by a mapping. There can be at least these two approaches for the mapping. In a first approach, for each (set of) serving PLMN the network would indicate which of the disaster PLMNs apply. In a second approach, for each disaster PLMN the network indicates for which (set of) serving PLMNs this disaster PLMN applies.

One approach that the mapping is implemented using a bitmap where each bit in the bitmap corresponds to a PLMN (or set of PLMNs). For example, a bitmap may be provided for a (set of) serving PLMN where the first bit corresponds to the first disaster PLMN, the second bit corresponds to the second disaster PLMN, and so on. If a bit in the bitmap is set to 1, the disaster PLMN applies to the corresponding serving PLMN, while if the bit is set to 0, the disaster PLMN does not apply to the corresponding serving PLMN.

An example implementation of this embodiment is provided in **Table 5** below. In this example there is a bit string named applicableCommonDisasterPLMNs where each bit of the bit string corresponds to an entry in the list of commonDisasterPLMNs. The first bit corresponds to the first entry and the second bit corresponds to the second entry, and so on. A '1' on location N in the bitstring means that commonDisasterPLMN on position N is applicable to this Serving PLMN, and a 0 means that it is not applicable.

Alternatively, for each disaster PLMN there may be a bitmap where the first entry corresponds to the first set of serving PLMNs, the second bit to the second set of serving PLMNs, and so on. And if the bit is set to 1 that means that this disaster PLMN applies to the corresponding set of serving PLMNs but if the bit is set to 0 it means that this disaster PLMN does not apply to the corresponding set of serving PLMNs.

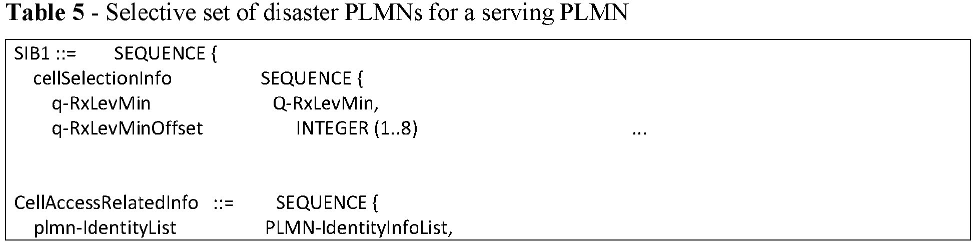

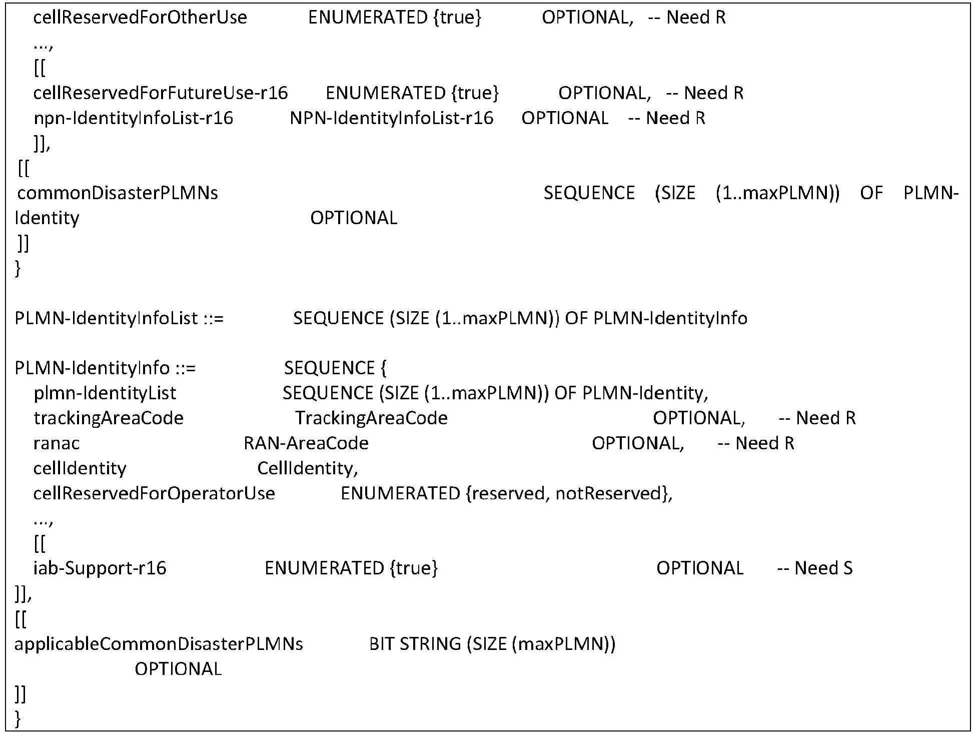

In some embodiments, the network sends both a common list of disaster PLMNs, and PLMN-specific disaster PLMNs. For a particular serving PLMN, the UE considers the disaster PLMNs for a serving PLMN to be the union of the common disaster PLMNs and the PLMN-specific disaster PLMNs.

The network may determine which disaster PLMNs shall apply for all serving PLMNs and place those in the common list. The network also determines if there are any disaster PLMNs which are only applicable for particular PLMN(s). If so, the network would place those in the PLMN-IdentityInfo IE for those particular PLMN(s). An example of this approach is shown in **Table 6,** below.

If, for a serving PLMN, the PLMN-specific disaster PLMN-list is empty or not present, the UE may consider the disaster PLMNs for that serving PLMN to be those in the common list. If the common disaster PLMN list is empty or not present, the UE may consider that the disaster PLMNs for a serving PLMN to be only the PLMN-specific disaster PLMNs.

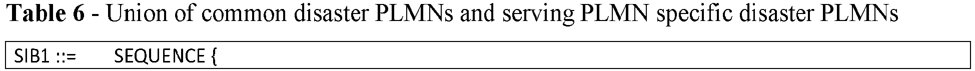

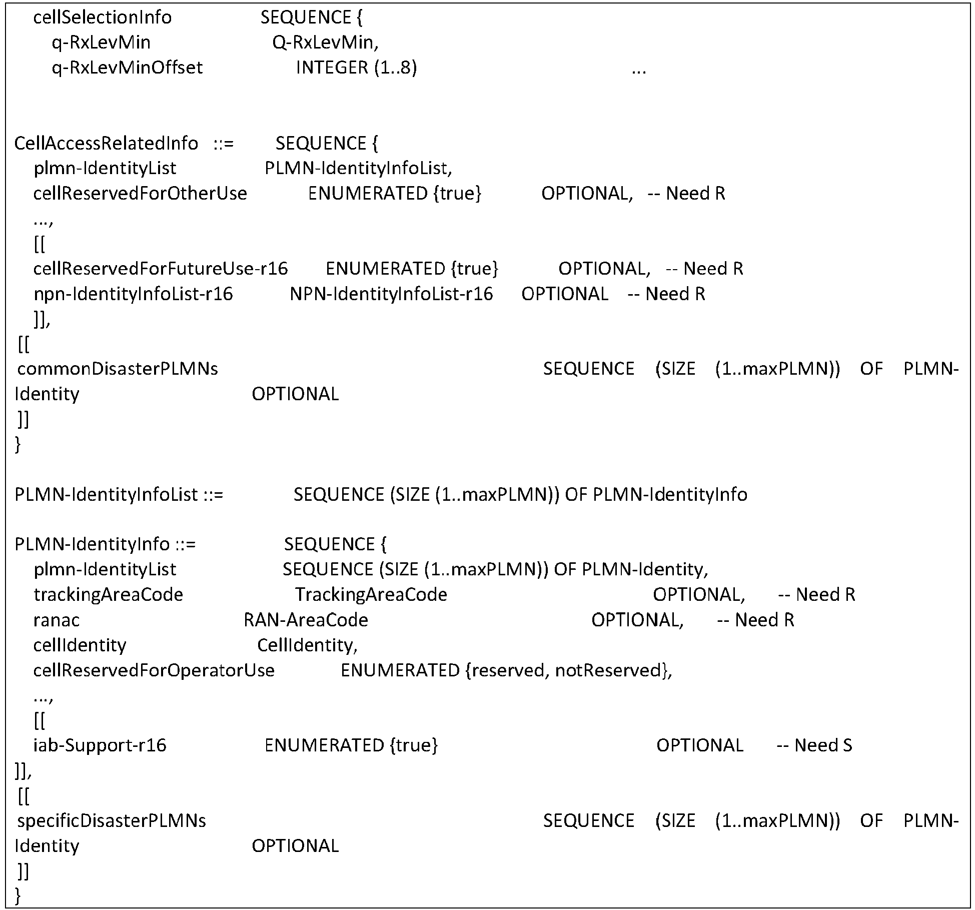

In some embodiments, the network indicates for a set of serving PLMNs whether the disaster PLMNs that are applicable, are the common disaster PLMNs or a list of specific PLMNs.

This can be implemented by a CHOICE structure in the system information, where the CHOICE is set to a first choice (named commonDisasterPLMNsApplicable in the example shown in **Table 7** below) or a second choice if a list of specific disaster PLMNs (named specificDisasterPLMNs in the below example) is applicable. If the network uses the first choice, the UE would for the serving PLMN (or set of serving PLMNs) consider the disaster PLMN to be those sent in the common list. If the network uses the second choice the UE would for the serving PLMN consider the disaster PLMN to be those explicitly signaled for the (set of) serving PLMNs.

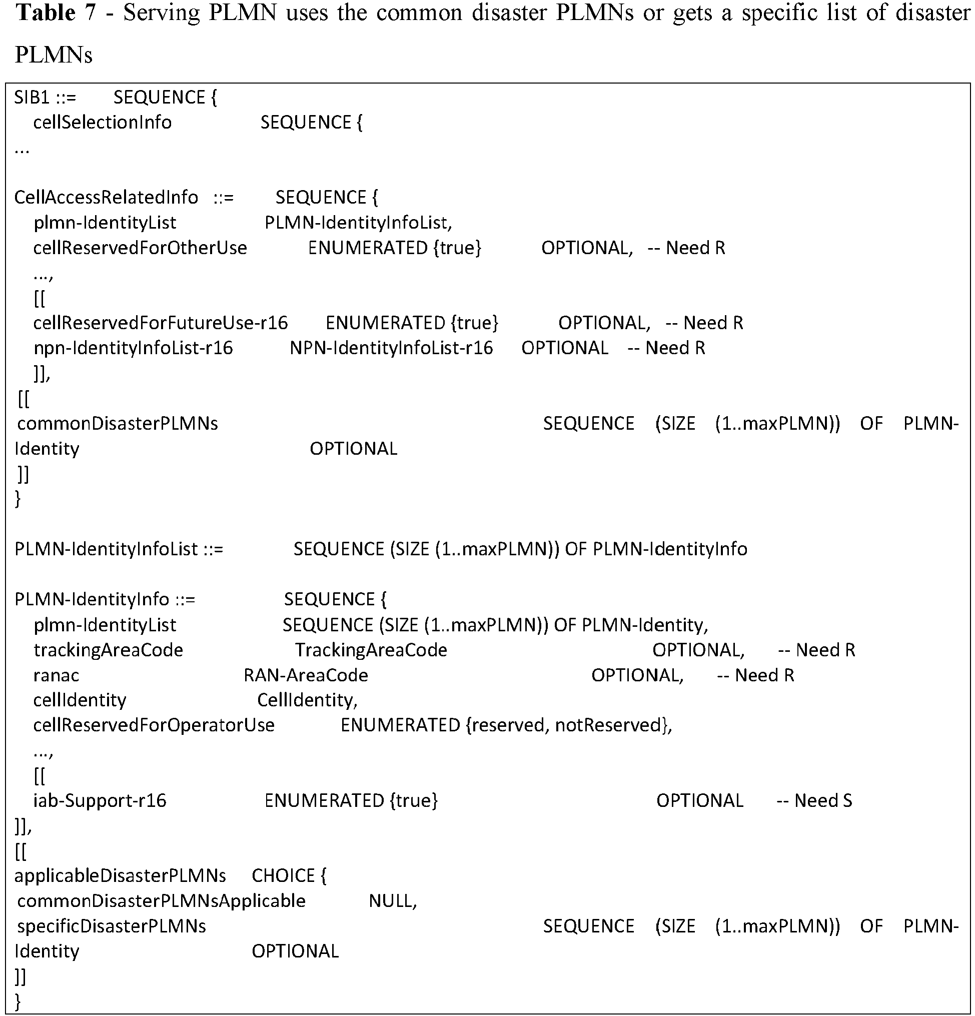

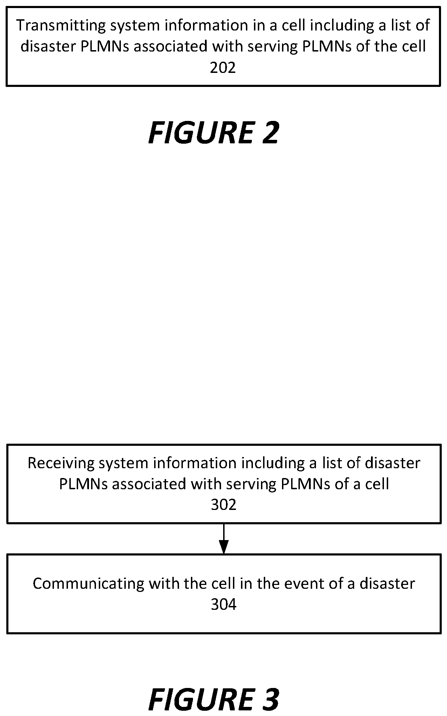

**Figure 2** illustrates a method of operating a network node in a radio access network, RAN. The method may include transmitting (block 202) system information in a cell served by the network node. The system information includes a set of one or more disaster PLMNs. A UE that can normally connect to one of the disaster PLMNs in the set of disaster PLMNs can use the cell in the event of a disaster in which the UE is unable to communicate with the disaster PLMN. The system information may include, for example, a system information block message, such as a SIB 1 message.

In some embodiments, the system information includes a common set of disaster PLMNs that are common to a specified set of serving PLMNs of the cell.

In some embodiments, the common set of disaster PLMNs that are available to UEs associated to the specified set of serving PLMNs of the cell is provided within a top level of a system information block. The specified set of serving PLMNs of the cell for which the common set of disaster PLMNs is provided may be identified by a flag associated with the specified set of serving PLMNs of the cell.

In some embodiments, the system information includes one or more lists of disaster PLMNs. The system information may indicate a list of disaster PLMNs associated to a set of serving PLMNs of the cell.

In the claimed embodiment, the system information indicates which disaster PLMNs are associated to a set of serving PLMNs of the cell such that UEs associated to the disaster PLMN can use a PLMN in the associated set of serving PLMNs in the event of disaster.

In some embodiments, the system information includes a common set of disaster PLMNs that are associated to a selected set of serving PLMNs of the cell. For each set of serving PLMNs of the cell, the system information may identify whether UEs associated to the set of serving PLMNs should use the common set of disaster PLMNs or a set of PLMN-specific disaster PLMNs.

**Figure 3** illustrates a method of operating a user equipment, UE, in a radio access network, RAN. The method includes receiving (block 302) system information in a cell of the RAN, wherein the system information includes a set of one or more disaster PLMNs, including a disaster PLMN to which the UE is associated, that can use the cell in the event of a disaster in which the UE is unable to communicate with the disaster PLMN, and communicating (block 304) with the cell in the event of a disaster in which the UE is unable to communicate with the disaster PLMN. The system information may include, for example, a SIB message, such as a SIB1 message.

In some embodiments, the system information includes a common set of disaster PLMNs that are associated to a specified set of serving PLMNs of the cell. The common set of disaster PLMNs that are associated to the specified set of serving PLMNs of the cell may be provided within a top level of the system information. The specified set of serving PLMNs of the cell for which the common set of disaster PLMNs is provided may be identified by a flag associated with the specified set of serving PLMNs of the cell.

In some embodiments, the system information indicates which of the disaster PLMNs in the common set of disaster PLMNs is associated to the specified set of serving PLMNs of the cell.

In some embodiments, the system information includes a common set of disaster PLMNs that are associated to a selected set of serving PLMNs of the cell. For each set of serving PLMNs, the system information identifies whether the set of serving PLMNs is associated to the common set of disaster PLMNs or a set of PLMN-specific disaster PLMNs.

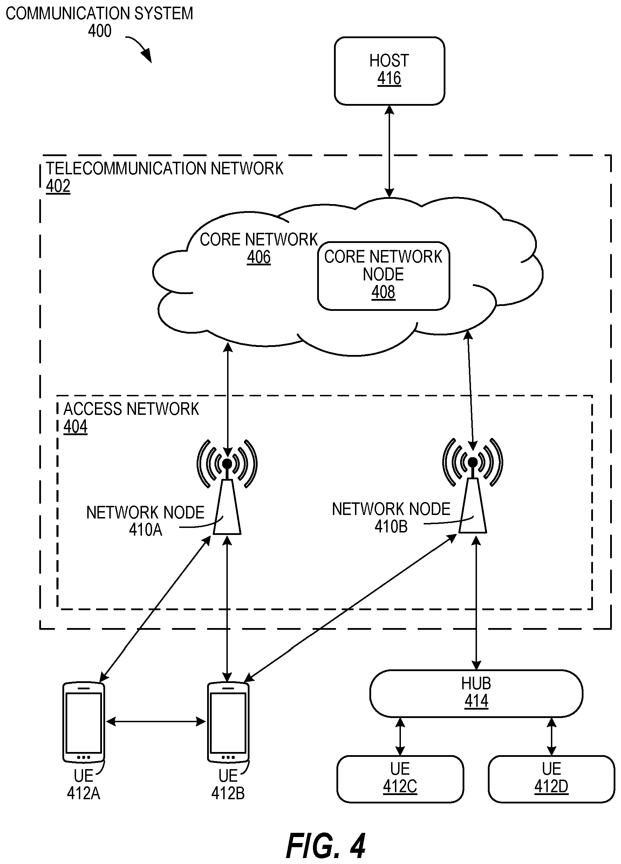

**Figure 4** shows an example of a communication system 400 in accordance with some embodiments.

In the example, the communication system 400 includes a telecommunication network 402 that includes an access network 404, such as a radio access network (RAN), and a core network 406, which includes one or more core network nodes 408. The access network 404 includes one or more access network nodes, such as network nodes 410a and 410b (one or more of which may be generally referred to as network nodes 410), or any other similar 3^{rd} Generation Partnership Project (3GPP) access node or non-3GPP access point. The network nodes 410 facilitate direct or indirect connection of user equipment (UE), such as by connecting UEs 412a, 412b, 412c, and 412d (one or more of which may be generally referred to as UEs 412) to the core network 406 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 400 may include any number of wired or wireless networks, network nodes, UEs, and/or any other components or systems that may facilitate or participate in the communication of data and/or signals whether via wired or wireless connections. The communication system 400 may include and/or interface with any type of communication, telecommunication, data, cellular, radio network, and/or other similar type of system.

The UEs 412 may be any of a wide variety of communication devices, including wireless devices arranged, configured, and/or operable to communicate wirelessly with the network nodes 410 and other communication devices. Similarly, the network nodes 410 are arranged, capable, configured, and/or operable to communicate directly or indirectly with the UEs 412 and/or with other network nodes or equipment in the telecommunication network 402 to enable and/or provide network access, such as wireless network access, and/or to perform other functions, such as administration in the telecommunication network 402.

In the depicted example, the core network 406 connects the network nodes 410 to one or more hosts, such as host 416. These connections may be direct or indirect via one or more intermediary networks or devices. In other examples, network nodes may be directly coupled to hosts. The core network 406 includes one more core network nodes (e.g., core network node 408) that are structured with hardware and software components. Features of these components may be substantially similar to those described with respect to the UEs, network nodes, and/or hosts, such that the descriptions thereof are generally applicable to the corresponding components of the core network node 408. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host 416 may be under the ownership or control of a service provider other than an operator or provider of the access network 404 and/or the telecommunication network 402, and may be operated by the service provider or on behalf of the service provider. The host 416 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 400 of Figure 4 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network 402 is a cellular network that implements 3GPP standardized features. Accordingly, the telecommunications network 402 may support network slicing to provide different logical networks to different devices that are connected to the telecommunication network 402. For example, the telecommunications network 402 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, the UEs 412 are configured to transmit and/or receive information without direct human interaction. For instance, a UE may be designed to transmit information to the access network 404 on a predetermined schedule, when triggered by an internal or external event, or in response to requests from the access network 404. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In the example, the hub 414 communicates with the access network 404 to facilitate indirect communication between one or more UEs (e.g., UE 412c and/or 412d) and network nodes (e.g., network node 410b). In some examples, the hub 414 may be a controller, router, content source and analytics, or any of the other communication devices described herein regarding UEs. For example, the hub 414 may be a broadband router enabling access to the core network 406 for the UEs. As another example, the hub 414 may be a controller that sends commands or instructions to one or more actuators in the UEs. Commands or instructions may be received from the UEs, network nodes 410, or by executable code, script, process, or other instructions in the hub 414. As another example, the hub 414 may be a data collector that acts as temporary storage for UE data and, in some embodiments, may perform analysis or other processing of the data. As another example, the hub 414 may be a content source. For example, for a UE that is a VR headset, display, loudspeaker or other media delivery device, the hub 414 may retrieve VR assets, video, audio, or other media or data related to sensory information via a network node, which the hub 414 then provides to the UE either directly, after performing local processing, and/or after adding additional local content. In still another example, the hub 414 acts as a proxy server or orchestrator for the UEs, in particular in if one or more of the UEs are low energy IoT devices.

The hub 414 may have a constant/persistent or intermittent connection to the network node 410b. The hub 414 may also allow for a different communication scheme and/or schedule between the hub 414 and UEs (e.g., UE 412c and/or 412d), and between the hub 414 and the core network 406. In other examples, the hub 414 is connected to the core network 406 and/or one or more UEs via a wired connection. Moreover, the hub 414 may be configured to connect to an M2M service provider over the access network 404 and/or to another UE over a direct connection. In some scenarios, UEs may establish a wireless connection with the network nodes 410 while still connected via the hub 414 via a wired or wireless connection. In some embodiments, the hub 414 may be a dedicated hub - that is, a hub whose primary function is to route communications to/from the UEs from/to the network node 410b. In other embodiments, the hub 414 may be a non-dedicated hub - that is, a device which is capable of operating to route communications between the UEs and network node 410b, but which is additionally capable of operating as a communication start and/or end point for certain data channels.

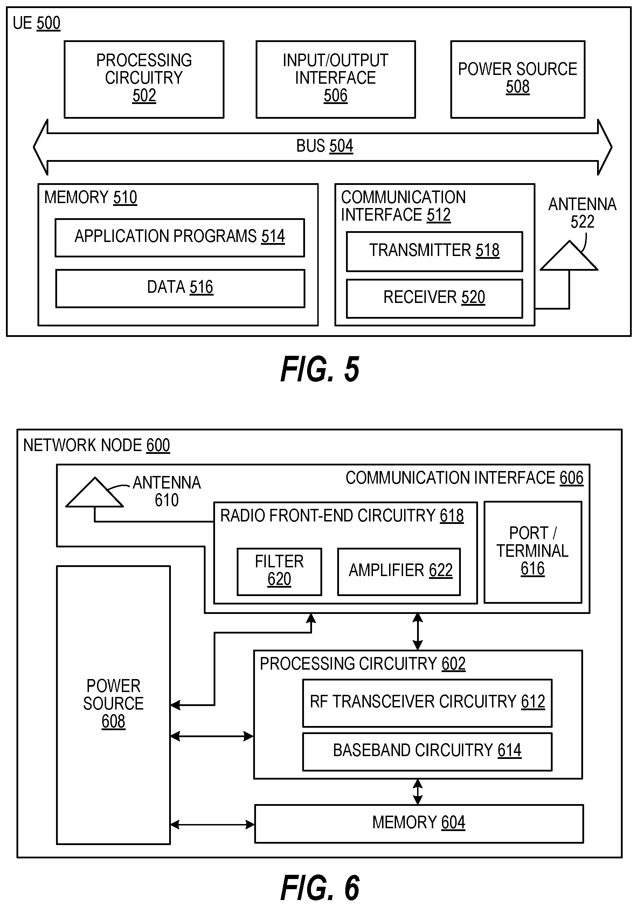

**Figure 5** shows a UE 500 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 500 includes processing circuitry 502 that is operatively coupled via a bus 504 to an input/output interface 506, a power source 508, a memory 510, a communication interface 512, and/or any other component, or any combination thereof. Certain UEs may utilize all or a subset of the components shown in Figure 5. The level of integration between the components may vary from one UE to another UE. Further, certain UEs may contain multiple instances of a component, such as multiple processors, memories, transceivers, transmitters, receivers, etc.

The processing circuitry 502 is configured to process instructions and data and may be configured to implement any sequential state machine operative to execute instructions stored as machine-readable computer programs in the memory 510. The processing circuitry 502 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 502 may include multiple central processing units (CPUs).

In the example, the input/output interface 506 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 500. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 508 is structured as a battery or battery pack. Other types of power sources, such as an external power source (e.g., an electricity outlet), photovoltaic device, or power cell, may be used. The power source 508 may further include power circuitry for delivering power from the power source 508 itself, and/or an external power source, to the various parts of the UE 500 via input circuitry or an interface such as an electrical power cable. Delivering power may be, for example, for charging of the power source 508. Power circuitry may perform any formatting, converting, or other modification to the power from the power source 508 to make the power suitable for the respective components of the UE 500 to which power is supplied.

The memory 510 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 510 includes one or more application programs 514, such as an operating system, web browser application, a widget, gadget engine, or other application, and corresponding data 516. The memory 510 may store, for use by the UE 500, any of a variety of various operating systems or combinations of operating systems.

The memory 510 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 510 may allow the UE 500 to access instructions, application programs and the like, stored on transitory or non-transitory memory media, to off-load data, or to upload data. An article of manufacture, such as one utilizing a communication system may be tangibly embodied as or in the memory 510, which may be or comprise a device-readable storage medium.

The processing circuitry 502 may be configured to communicate with an access network or other network using the communication interface 512. The communication interface 512 may comprise one or more communication subsystems and may include or be communicatively coupled to an antenna 522. The communication interface 512 may include one or more transceivers used to communicate, such as by communicating with one or more remote transceivers of another device capable of wireless communication (e.g., another UE or a network node in an access network). Each transceiver may include a transmitter 518 and/or a receiver 520 appropriate to provide network communications (e.g., optical, electrical, frequency allocations, and so forth). Moreover, the transmitter 518 and receiver 520 may be coupled to one or more antennas (e.g., antenna 522) and may share circuit components, software or firmware, or alternatively be implemented separately.

In the illustrated embodiment, communication functions of the communication interface 512 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 512, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 500 shown in Figure 5.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g. by controlling an actuator) to increase or decrease the drone's speed. The first and/or the second UE can also include more than one of the functionalities described above. For example, a UE might comprise the sensor and the actuator, and handle communication of data for both the speed sensor and the actuators.

**Figure 6** shows a network node 600 in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs) and NR NodeBs (gNBs)).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 600 includes a processing circuitry 602, a memory 604, a communication interface 606, and a power source 608. The network node 600 may be composed of multiple physically separate components (e.g., a NodeB component and a RNC component, or a BTS component and a BSC component, etc.), which may each have their own respective components. In certain scenarios in which the network node 600 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 600 may be configured to support multiple radio access technologies (RATs). In such embodiments, some components may be duplicated (e.g., separate memory 604 for different RATs) and some components may be reused (e.g., a same antenna 610 may be shared by different RATs). The network node 600 may also include multiple sets of the various illustrated components for different wireless technologies integrated into network node 600, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 600.

The processing circuitry 602 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 600 components, such as the memory 604, to provide network node 600 functionality.

In some embodiments, the processing circuitry 602 includes a system on a chip (SOC). In some embodiments, the processing circuitry 602 includes one or more of radio frequency (RF) transceiver circuitry 612 and baseband processing circuitry 614. In some embodiments, the radio frequency (RF) transceiver circuitry 612 and the baseband processing circuitry 614 may be on separate chips (or sets of chips), boards, or units, such as radio units and digital units. In alternative embodiments, part or all of RF transceiver circuitry 612 and baseband processing circuitry 614 may be on the same chip or set of chips, boards, or units.

The memory 604 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 602. The memory 604 may store any suitable instructions, data, or information, including a computer program, software, an application including one or more of logic, rules, code, tables, and/or other instructions capable of being executed by the processing circuitry 602 and utilized by the network node 600. The memory 604 may be used to store any calculations made by the processing circuitry 602 and/or any data received via the communication interface 606. In some embodiments, the processing circuitry 602 and memory 604 is integrated.

The communication interface 606 is used in wired or wireless communication of signaling and/or data between a network node, access network, and/or UE. As illustrated, the communication interface 606 comprises port(s)/terminal(s) 616 to send and receive data, for example to and from a network over a wired connection. The communication interface 606 also includes radio front-end circuitry 618 that may be coupled to, or in certain embodiments a part of, the antenna 610. Radio front-end circuitry 618 comprises filters 620 and amplifiers 622. The radio front-end circuitry 618 may be connected to an antenna 610 and processing circuitry 602. The radio front-end circuitry may be configured to condition signals communicated between antenna 610 and processing circuitry 602. The radio front-end circuitry 618 may receive digital data that is to be sent out to other network nodes or UEs via a wireless connection. The radio front-end circuitry 618 may convert the digital data into a radio signal having the appropriate channel and bandwidth parameters using a combination of filters 620 and/or amplifiers 622. The radio signal may then be transmitted via the antenna 610. Similarly, when receiving data, the antenna 610 may collect radio signals which are then converted into digital data by the radio front-end circuitry 618. The digital data may be passed to the processing circuitry 602. In other embodiments, the communication interface may comprise different components and/or different combinations of components.

In certain alternative embodiments, the network node 600 does not include separate radio front-end circuitry 618, instead, the processing circuitry 602 includes radio front-end circuitry and is connected to the antenna 610. Similarly, in some embodiments, all or some of the RF transceiver circuitry 612 is part of the communication interface 606. In still other embodiments, the communication interface 606 includes one or more ports or terminals 616, the radio front-end circuitry 618, and the RF transceiver circuitry 612, as part of a radio unit (not shown), and the communication interface 606 communicates with the baseband processing circuitry 614, which is part of a digital unit (not shown).

The antenna 610 may include one or more antennas, or antenna arrays, configured to send and/or receive wireless signals. The antenna 610 may be coupled to the radio front-end circuitry 618 and may be any type of antenna capable of transmitting and receiving data and/or signals wirelessly. In certain embodiments, the antenna 610 is separate from the network node 600 and connectable to the network node 600 through an interface or port.

The antenna 610, communication interface 606, and/or the processing circuitry 602 may be configured to perform any receiving operations and/or certain obtaining operations described herein as being performed by the network node. Any information, data and/or signals may be received from a UE, another network node and/or any other network equipment. Similarly, the antenna 610, the communication interface 606, and/or the processing circuitry 602 may be configured to perform any transmitting operations described herein as being performed by the network node. Any information, data and/or signals may be transmitted to a UE, another network node and/or any other network equipment.

The power source 608 provides power to the various components of network node 600 in a form suitable for the respective components (e.g., at a voltage and current level needed for each respective component). The power source 608 may further comprise, or be coupled to, power management circuitry to supply the components of the network node 600 with power for performing the functionality described herein. For example, the network node 600 may be connectable to an external power source (e.g., the power grid, an electricity outlet) via an input circuitry or interface such as an electrical cable, whereby the external power source supplies power to power circuitry of the power source 608. As a further example, the power source 608 may comprise a source of power in the form of a battery or battery pack which is connected to, or integrated in, power circuitry. The battery may provide backup power should the external power source fail.

Embodiments of the network node 600 may include additional components beyond those shown in Figure 6 for providing certain aspects of the network node's functionality, including any of the functionality described herein and/or any functionality necessary to support the subject matter described herein. For example, the network node 600 may include user interface equipment to allow input of information into the network node 600 and to allow output of information from the network node 600. This may allow a user to perform diagnostic, maintenance, repair, and other administrative functions for the network node 600.

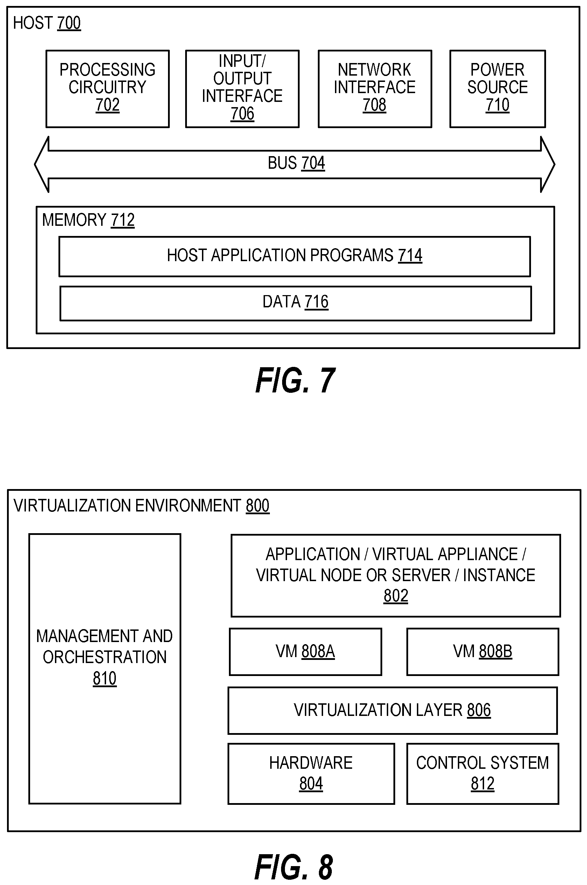

**Figure 7** is a block diagram of a host 700, which may be an embodiment of the host 416 of Figure 4, in accordance with various aspects described herein. As used herein, the host 700 may be or comprise various combinations hardware and/or software, including a standalone server, a blade server, a cloud-implemented server, a distributed server, a virtual machine, container, or processing resources in a server farm. The host 700 may provide one or more services to one or more UEs.

The host 700 includes processing circuitry 702 that is operatively coupled via a bus 704 to an input/output interface 706, a network interface 708, a power source 710, and a memory 712. Other components may be included in other embodiments. Features of these components may be substantially similar to those described with respect to the devices of previous figures, such as Figures 5 and 6, such that the descriptions thereof are generally applicable to the corresponding components of host 700.

The memory 712 may include one or more computer programs including one or more host application programs 714 and data 716, which may include user data, e.g., data generated by a UE for the host 700 or data generated by the host 700 for a UE. Embodiments of the host 700 may utilize only a subset or all of the components shown. The host application programs 714 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 714 may also provide for user authentication and licensing checks and may periodically report health, routes, and content availability to a central node, such as a device in or on the edge of a core network. Accordingly, the host 700 may select and/or indicate a different host for over-the-top services for a UE. The host application programs 714 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

**Figure 8** is a block diagram illustrating a virtualization environment 800 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 800 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 802 (which may alternatively be called software instances, virtual appliances, network functions, virtual nodes, virtual network functions, etc.) are run in the virtualization environment Q400 to implement some of the features, functions, and/or benefits of some of the embodiments disclosed herein.

Hardware 804 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 806 (also referred to as hypervisors or virtual machine monitors (VMMs)), provide VMs 808a and 808b (one or more of which may be generally referred to as VMs 808), and/or perform any of the functions, features and/or benefits described in relation with some embodiments described herein. The virtualization layer 806 may present a virtual operating platform that appears like networking hardware to the VMs 808.

The VMs 808 comprise virtual processing, virtual memory, virtual networking or interface and virtual storage, and may be run by a corresponding virtualization layer 806. Different embodiments of the instance of a virtual appliance 802 may be implemented on one or more of VMs 808, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 808 may be a software implementation of a physical machine that runs programs as if they were executing on a physical, non-virtualized machine. Each of the VMs 808, and that part of hardware 804 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 808 on top of the hardware 804 and corresponds to the application 802.

Hardware 804 may be implemented in a standalone network node with generic or specific components. Hardware 804 may implement some functions via virtualization. Alternatively, hardware 804 may be part of a larger cluster of hardware (e.g. such as in a data center or CPE) where many hardware nodes work together and are managed via management and orchestration 810, which, among others, oversees lifecycle management of applications 802. In some embodiments, hardware 804 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 812 which may alternatively be used for communication between hardware nodes and radio units.

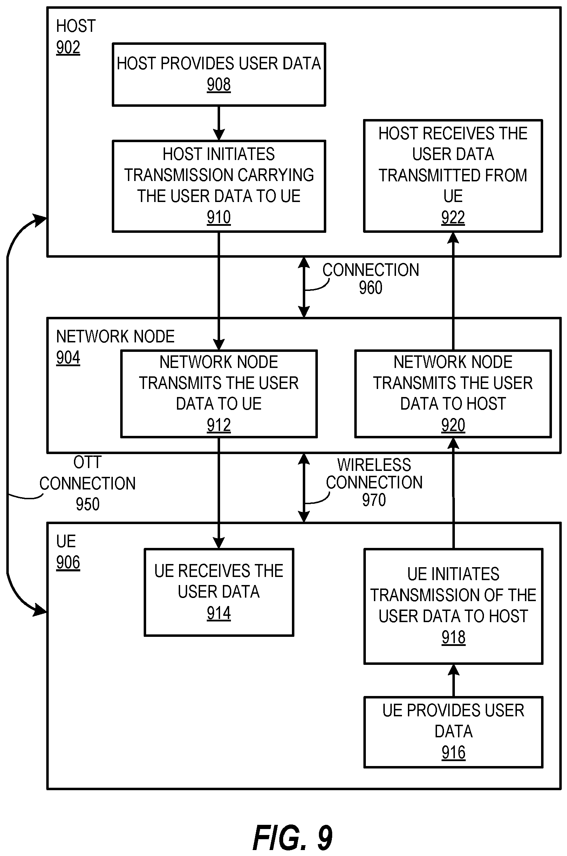

**Figure 9** shows a communication diagram of a host 902 communicating via a network node 904 with a UE 906 over a partially wireless connection. Example implementations, in accordance with various embodiments, of the UE (such as a UE 412a of Figure 4 and/or UE 500 of Figure 5), network node (such as network node 410a of Figure 4 and/or network node 600 of Figure 6), and host (such as host 416 of Figure 4 and/or host 700 of Figure 7) discussed in the preceding paragraphs will now be described with reference to Figure 9.

Like host 700, embodiments of host 902 include hardware, such as a communication interface, processing circuitry, and memory. The host 902 also includes software, which is stored in or accessible by the host 902 and executable by the processing circuitry. The software includes a host application that may be operable to provide a service to a remote user, such as the UE 906 connecting via an over-the-top (OTT) connection 950 extending between the UE 906 and host 902. In providing the service to the remote user, a host application may provide user data which is transmitted using the OTT connection 950.

The network node 904 includes hardware enabling it to communicate with the host 902 and UE 906. The connection 960 may be direct or pass through a core network (like core network 406 of Figure 4) and/or one or more other intermediate networks, such as one or more public, private, or hosted networks. For example, an intermediate network may be a backbone network or the Internet.

The UE 906 includes hardware and software, which is stored in or accessible by UE 906 and executable by the UE's processing circuitry. The software includes a client application, such as a web browser or operator-specific "app" that may be operable to provide a service to a human or non-human user via UE 906 with the support of the host 902. In the host 902, an executing host application may communicate with the executing client application via the OTT connection 950 terminating at the UE 906 and host 902. In providing the service to the user, the UE's client application may receive request data from the host's host application and provide user data in response to the request data. The OTT connection 950 may transfer both the request data and the user data. The UE's client application may interact with the user to generate the user data that it provides to the host application through the OTT connection 950.

The OTT connection 950 may extend via a connection 960 between the host 902 and the network node 904 and via a wireless connection 970 between the network node 904 and the UE 906 to provide the connection between the host 902 and the UE 906. The connection 960 and wireless connection 970, over which the OTT connection 950 may be provided, have been drawn abstractly to illustrate the communication between the host 902 and the UE 906 via the network node 904, without explicit reference to any intermediary devices and the precise routing of messages via these devices.

As an example of transmitting data via the OTT connection 950, in step 908, the host 902 provides user data, which may be performed by executing a host application. In some embodiments, the user data is associated with a particular human user interacting with the UE 906. In other embodiments, the user data is associated with a UE 906 that shares data with the host 902 without explicit human interaction. In step 910, the host 902 initiates a transmission carrying the user data towards the UE 906. The host 902 may initiate the transmission responsive to a request transmitted by the UE 906. The request may be caused by human interaction with the UE 906 or by operation of the client application executing on the UE 906. The transmission may pass via the network node 904, in accordance with the teachings of the embodiments described throughout this disclosure. Accordingly, in step 912, the network node 904 transmits to the UE 906 the user data that was carried in the transmission that the host 902 initiated, in accordance with the teachings of the embodiments described throughout this disclosure. In step 914, the UE 906 receives the user data carried in the transmission, which may be performed by a client application executed on the UE 906 associated with the host application executed by the host 902.

In some examples, the UE 906 executes a client application which provides user data to the host 902. The user data may be provided in reaction or response to the data received from the host 902. Accordingly, in step 916, the UE 906 may provide user data, which may be performed by executing the client application. In providing the user data, the client application may further consider user input received from the user via an input/output interface of the UE 906. Regardless of the specific manner in which the user data was provided, the UE 906 initiates, in step 918, transmission of the user data towards the host 902 via the network node 904. In step 920, in accordance with the teachings of the embodiments described throughout this disclosure, the network node 904 receives user data from the UE 906 and initiates transmission of the received user data towards the host 902. In step 922, the host 902 receives the user data carried in the transmission initiated by the UE 906.

One or more of the various embodiments improve the performance of OTT services provided to the UE 906 using the OTT connection 950, in which the wireless connection 970 forms the last segment. More precisely, the teachings of these embodiments may improve the efficiency of transmission of system information and thereby provide benefits such as increased network throughput, and lower overhead.

In an example scenario, factory status information may be collected and analyzed by the host 902. As another example, the host 902 may process audio and video data which may have been retrieved from a UE for use in creating maps. As another example, the host 902 may collect and analyze real-time data to assist in controlling vehicle congestion (e.g., controlling traffic lights). As another example, the host 902 may store surveillance video uploaded by a UE. As another example, the host 902 may store or control access to media content such as video, audio, VR or AR which it can broadcast, multicast or unicast to UEs. As other examples, the host 902 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency and other factors on which the one or more embodiments improve. There may further be an optional network functionality for reconfiguring the OTT connection 950 between the host 902 and UE 906, in response to variations in the measurement results. The measurement procedure and/or the network functionality for reconfiguring the OTT connection may be implemented in software and hardware of the host 902 and/or UE 906. In some embodiments, sensors (not shown) may be deployed in or in association with other devices through which the OTT connection 950 passes; the sensors may participate in the measurement procedure by supplying values of the monitored quantities exemplified above, or supplying values of other physical quantities from which software may compute or estimate the monitored quantities. The reconfiguring of the OTT connection 950 may include message format, retransmission settings, preferred routing etc.; the reconfiguring need not directly alter the operation of the network node 904. Such procedures and functionalities may be known and practiced in the art. In certain embodiments, measurements may involve proprietary UE signaling that facilitates measurements of throughput, propagation times, latency and the like, by the host 902. The measurements may be implemented in that software causes messages to be transmitted, in particular empty or 'dummy' messages, using the OTT connection 950 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

### Abbreviations

- UE: User Equipment Wireless device in 3GPP system
- gNB: Base station in NR
- eNB: Base station in LTE
- MINT: Minimization of service INTerruption
- RAN: Radio Access Network
- PLMN: Public Land Mobile Network
- NR: New Radio
- 3GPP: 3rd generation partnership project
- SIB: System information block
- RRC: Radio Resource Control

## Claims

1. A method performed by a network node in a radio access network, RAN, comprising:
transmitting (202) system information in a cell served by the network node, wherein the system information comprises a set of one or more disaster public land mobile networks, PLMNs, that indicate that a user equipment, UE, associated to a disaster PLMN can use the cell in the
event of a disaster in which the UE is unable to communicate with a normal PLMN to which the UE may normally connect, and wherein the system information indicates which disaster PLMNs are associated to a set of serving PLMNs of the cell such that UEs associated to the disaster PLMN can use a PLMN in the associated set of serving PLMNs in the event of a disaster.

2. The method of Claim 1, wherein the system information comprises a system information block, SIB, message.

3. A network node (600) adapted to perform the method of any of claims 1 and 2.

4. A method performed by a user equipment, UE, in a radio access network, RAN, comprising:
receiving (302) system information in a cell of the RAN, wherein the system information comprises a set of one or more disaster public land mobile networks, PLMNs, including a disaster PLMN to which the UE is associated and that indicates that the UE can use the cell in
the event of a disaster in which the UE is unable to communicate with a normal PLMN, and wherein the system information indicates which disaster PLMNs are associated to a set of serving PLMNs of the cell such that UEs associated to the disaster PLMN can use a PLMN in the associated set of serving PLMNs in the event of a disaster; and
communicating (304) with the cell in event of a disaster in which the UE is unable to communicate with the normal PLMN.

5. The method of Claim 4, wherein the system information comprises a system information block, SIB, message.

6. A user equipment (500) adapted to perform the method of any of claims 4 to 5.

## Patentansprüche

1. Verfahren, durchgeführt durch einen Netzwerkknoten in einem Funkzugangsnetzwerk (radio access network - RAN), Folgendes umfassend:
Übertragen (202) von Systeminformationen in einer Zelle, die durch den Netzwerkknoten bedient wird, wobei die Systeminformationen einen Satz von einem oder mehreren öffentlichen Landmobilfunknetzwerken (public land mobile networks - PLMNs) für Katastrophen umfassen, die angeben, dass ein Benutzergerät (user equipment - UE), das einem Katastrophen-PLMN zugeordnet ist, die Zelle im Falle einer Katastrophe verwenden kann, in dem das UE nicht in der Lage ist, mit einem normalen PLMN zu kommunizieren, mit dem sich das UE normalerweise verbinden kann, und wobei die Systeminformationen angeben, welche Katastrophen-PLMNs einem Satz von bedienenden PLMNs der Zelle zugeordnet sind, sodass UEs, die dem Katastrophen-PLMN zugeordnet sind, im Falle einer Katastrophe ein PLMN in dem zugeordneten Satz von bedienenden PLMNs verwenden können.

2. Verfahren nach Anspruch 1, wobei die Systeminformationen eine Systeminformationsblock(SIB)-Nachricht umfassen.

3. Netzwerkknoten (600), der angepasst ist, um das Verfahren nach einem der Ansprüche 1 und 2 durchzuführen.

4. Verfahren, das durch ein Benutzergerät (UE) in einem Funkzugangsnetzwerk (RAN) durchgeführt wird, Folgendes umfassend:
Empfangen (302) von Systeminformationen in einer Zelle des RAN, wobei die Systeminformationen einen Satz von einem oder mehreren öffentlichen Landmobilfunknetzwerken (PLMNs) für Katastrophen umfassen, einschließlich eines Katastrophen-PLMN, dem das UE zugeordnet ist und das angibt, dass das UE die Zelle im Falle einer Katastrophe verwenden kann, in dem das UE nicht in der Lage ist, mit einem normalen PLMN zu kommunizieren, und wobei die Systeminformationen angeben, welche Katastrophen-PLMNs einem Satz von bedienenden PLMNs der Zelle zugeordnet sind, sodass UEs, die dem Katastrophen-PLMN zugeordnet sind, im Falle einer Katastrophe ein PLMN in dem zugeordneten Satz von bedienenden PLMNs verwenden können; und
Kommunizieren (304) mit der Zelle im Falle einer Katastrophe, in dem das UE nicht in der Lage ist, mit dem normalen PLMN zu kommunizieren.

5. Verfahren nach Anspruch 4, wobei die Systeminformationen eine Systeminformationsblock(SIB)-Nachricht umfassen.

6. Benutzergerät (500), das angepasst ist, um das Verfahren nach einem der Ansprüche 4 bis 5 durchzuführen.

## Revendications

1. Procédé réalisé par un nœud de réseau dans un réseau d'accès radio, RAN, comprenant :
la transmission (202) d'informations système dans une cellule desservie par le nœud de réseau, les informations système comprenant un ensemble d'un ou plusieurs réseaux mobiles terrestres publics, PLMN, en cas de catastrophe qui indiquent qu'un équipement utilisateur, UE, associé à un PLMN en cas de catastrophe peut utiliser la cellule en cas de catastrophe dans laquelle l'UE est incapable de communiquer avec un PLMN normal auquel l'UE peut normalement se connecter, et les informations système indiquant quels PLMN en cas de catastrophe sont associés à un ensemble de PLMN de desserte de la cellule de telle sorte que les UE associés au PLMN en cas de catastrophe peuvent utiliser un PLMN dans l'ensemble associé de PLMN de desserte en cas de catastrophe.

2. Procédé selon la revendication 1, dans lequel les informations système comprennent un message de bloc d'informations système, SIB.

3. Nœud de réseau (600) adapté pour réaliser le procédé selon l'une quelconque des revendications 1 et 2.

4. Procédé réalisé par un équipement utilisateur, UE, dans un réseau d'accès radio, RAN, comprenant :
la réception (302) d'informations système dans une cellule du RAN, les informations système comprenant un ensemble d'un ou plusieurs réseaux mobiles terrestres publics, PLMN, en cas de catastrophe y compris un PLMN en cas de catastrophe auquel l'UE est associé et qui indique que l'UE peut utiliser la cellule en cas de catastrophe dans laquelle l'UE est incapable de communiquer avec un PLMN normal, et les informations système indiquant quels PLMN en cas de catastrophe sont associés à un ensemble de PLMN de desserte de la cellule de telle sorte que les UE associés au PLMN en cas de catastrophe peuvent utiliser un PLMN dans l'ensemble associé de PLMN de desserte en cas de catastrophe ; et
la communication (304) avec la cellule en cas de catastrophe dans laquelle l'UE est incapable de communiquer avec le PLMN normal.

5. Procédé selon la revendication 4, dans lequel les informations système comprennent un message de bloc d'informations système, SIB.

6. Equipement utilisateur (500) adapté pour réaliser le procédé selon l'une quelconque des revendications 4 à 5.
